# EUROPEAN PATENT APPLICATION

(11) **EP 2 654 283 A1**
(43) Date of publication of application: **23.10.2013**
(21) Application number: 12164424.9
(22) Date of filing: 17.04.2012
(51) Int. Cl.: H04N 1/40, H04N 1/405, H04N 1/409

(54) **Method for halftoning**

(71) Applicant: OCE-Technologies B.V., 5914 CA Venlo (NL)
(72) Inventor: The designation of the inventor has not yet been filed
(74) Representative: De Jong, Robbert Arij Jeroen

(57) **Abstract**

A method is disclosed for generating a multilevel digital halftoned image, in which each pixel has one of at least three tone levels. In an ink jet process a tone level is e.g. associated with a drop size that is jetted on the position of a pixel in the printed image or alternatively with a number of ink drops that is jetted on the pixel position. In these and other print processes the resolution is usually sufficiently high to obfuscate steplike irregularities in curved lines, such as used in characters. However, the repetitive character of steps in edges of thin lines slanted relative to the pixel index directions makes them annoyingly visible. The disclosed method reduces the visibility of these periodic irregularities by applying a second halftoning method for edge pixels in the image and smoothing the tone levels of edge pixels around steplike transitions, keeping a sum of the tone levels unchanged in order not to affect the line width of the thin lines.

## Description

### FIELD OF THE INVENTION

The invention relates to an image processing method for generating a multilevel digital halftoned image, in which each pixel has one of at least three tone levels, the method comprising the steps of identifying pixels that are part of an edge in a digital image as edge pixels, attributing to pixels that are not edge pixels a tone level according to a first multilevel halftoning method, and attributing to edge pixels a tone level according to a second multilevel halftoning method. The invention further relates to a printer system comprising image processing means configured to process a digital image according to the invented method, specifically a printer system in which an image is printed by ink jet technology.

### BACKGROUND OF THE INVENTION

Present day print processes employ digital techniques for various reasons, among which imaging versatility and print process stability. Imaging versatility is mostly realised by ubiquitous digital electronic means, whereas print process stability results from the application of discrete tone levels for individual pixels. Many print processes use two tone levels for indicating whether or not colorant material is applied for a pixel. However, more and more print processes use more than two levels per pixel. This means that at least two tone levels develop colorant material in a stable manner, i.e. by applying an equal amount of colorant material for each pixel having a single tone level. In printers using ink jet technology this is accomplished e.g. by associating a first tone level with a small drop of ink and a second tone level with a large ink drop. If it is further possible to apply both a small and a large drop for a pixel, four tone levels in total are obtained, because one tone level is associated with applying no ink drop. An alternative is to use a fixed drop size and to associate a tone level with a number of drops that is applied for each pixel, the number of drops e.g. being effectuated by an appropriate pulse shape. A print process with more than two tone levels is called a multilevel print process.

Digital images that are to be printed, comprise many different intensity values. Each intensity value contains information for marking an image receiving material. The process that converts the intensity values into the available tone levels that may be printed, is called digital halftoning. In this proces a dithering technique is used to render areas with a gradation corresponding to an intensity value by a plurality of pixels with various available tone levels. The average value of the tone values of these pixels gives optically the required effect. Familiar digital halftoning processes comprise thresholding, stochastic dithering, ordered dithering and error diffusion. These processes have been developed for bitonal print processes and can readily be extended to multilevel print processes.

The resolution of the pixels in the printed image has a great impact on the resulting print quality. Especially in dark characters on a white background, which comprise straight and curved elements, a low resolution leads to visible steps in the outline of the character. A resolution of 600 pixels per inch or more is usually sufficient to overcome a jagged appearance of characters in a printed image. Furthermore, many so-called anti-aliasing techniques are known, whose purpose it is to deal with image elements that not fully coincide with the predefined pixels for the printed image. Thus, e.g., the stems of a character like "m" will not show different widths when scaled to a size in which the stems are not spaced by an integer number of pixels. In general, repetitive parallel lines will not show different linewidths when the repetition distance between the lines is not an integer number of pixels by using an anti-aliasing technique.

Still, the print quality of thin lines in print processes that enable good contrast, is lacking. This is especially the case for thin lines that are slanted relative to the index directions of the pixels in the printed image. The index directions in an image are those parallel to a line of pixels for which one of the indices for indicating a position of a pixel in the image remains constant while the other index in- or decreases. In every resolution there exist thin lines, since these refer to lines having a linewidth of only a few pixels. Whether the linewidth of a slanted thin line equals an integer number of pixels or not, it seems to fluctuate somewhat giving a "necklace-like" impression.

Furthermore, an abrupt edge of a dark area that is slanted relative to the index directions may also show a regular variation for which a human eye is particularly sensitive, depending on the interaction of the anti-aliasing method and the digital halftoning algorithm that is applied.

An object of the present invention is to obviate the above problems.

### SUMMARY OF THE INVENTION

According to the present invention, an image processing method for generating a multilevel digital halftoned image is extended by the step of identifying pixels within the group of edge pixels as transition pixels, indicating pixels that are positioned on an index line of pixels around a position where an edge shows a transition in index line, and the step of smoothing the tone levels of the transition pixels, wherein a sum of tone levels of pixels in the multilevel halftoned image remains equal. As long as a line follows a direction parallel to an indexing direction, the two edges of the line keep a fixed orientation relative to the grid of pixels that is applied to generate a halftoned image. However, a slanted line passes several index lines and, in passing, the tone levels of the pixels that are to constitute the line in the halftoned image are adjusted in accordance with the position of the pixels relative to an edge of the line. The linewidth of a printed line is determined by the way this adjustment is done for both edges of the line. It has been found that known methods of anti-aliasing and halftoning interact and do not keep the linewidth constant. By smoothing the tone levels of a number of edge pixels along an index line of pixels, called the transition pixels, the linewidth remains constant and will not show a regular variation. Note that when a printing process only applies two tone levels, smoothing according to the invented method is not possible, since there are no intermediate tone levels between the two available ones. A process of smoothing is usually not associated with rendering better edges, but this is the effect that is observed for edges of areas that are slanted relative to the index lines of the pixels in the printed image.

Details of further embodiments, enhancing the effect as described, are given in the claims.

A printer system comprising image processing means configured to process a digital image according to one of the claimed methods will thus show a better print quality, especially when slanted thin lines are part of the image. The image processing means are general processing units that are programmed to generate a multilevel digital halftoned image from a digital image. In particular, the print quality in a printer system, in which an image is printed by ink jet technology, is improved significantly by the application of the invented method.

### BRIEF DESCRIPTION OF THE DRAWINGS

Hereinafter the present invention is further elucidated with references to the appended drawings showing non-limiting embodiments and wherein:
- Fig. 1: is an image showing a slanted thin line in relation to print pixels;
- Fig. 2: is an enlarged detail of a slanted line in relation to print pixels;
- Fig. 3: shows a classification of edge pixels in edge direction and type;
- Fig. 4: shows an example of image intensity values and the generation of tone levels according to the invented method;
- Fig. 5: is a printing system in which the invented method is applied.

### DETAILED DESCRIPTION OF EMBODIMENTS

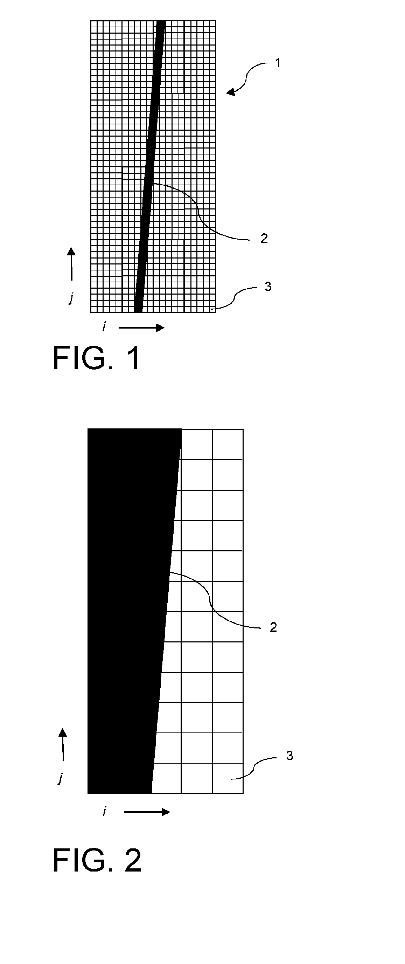

An embodiment of the invention will be described on the basis of a slanted line as depicted in Fig. 1 as an example. In Fig. 1 a grid of pixels 1 is shown with individual square pixels 3. However, the invention works equally well for non-square pixels in case the resolution in the two directions of the grid are not equal. A position of a pixel within the grid is indicated by a combination of the two indices *i* and *j.* A line of pixels having the same value for one of the indices is called an index line. The slanted line 2 crosses a number of pixels. The pixels that are in contact with the slanted line will pick up a different intensity value than pixels that are not in contact with the slanted line, depending on the rasterization process. In Fig. 2 the slanted line 2 and the grid of pixels are enlarged to focus on one edge of the slanted line.

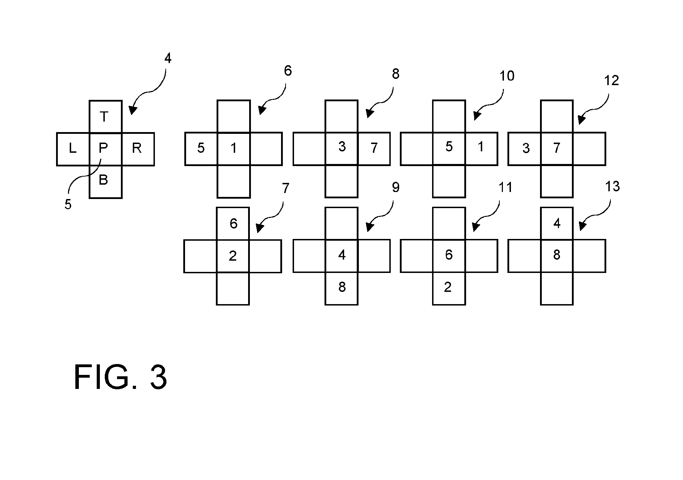

In an embodiment the intensity value of a selected pixel is compared to the intensity value of pixels around the selected pixel. In Fig. 3 a set of pixels 4 comprises a central pixel 5 with intensity value P and four nearest neighbour pixels with their respective intensity values. A pixel is an edge pixel if its intensity value is larger than a certain first threshold and the intensity value of one of its nearest neighbours is smaller than a second threshold or if its intensity value is smaller than the second threshold and the intensity value of one of its nearest neighbours is larger than the first threshold. The first threshold is larger than the second threshold. This means that edge pixels always come in pairs or larger sets. Combinations of a first type of edge pixel, in which the central pixel 5 has a high value, and a second type of edge pixel, in which the central pixel 5 has a low value, occur.

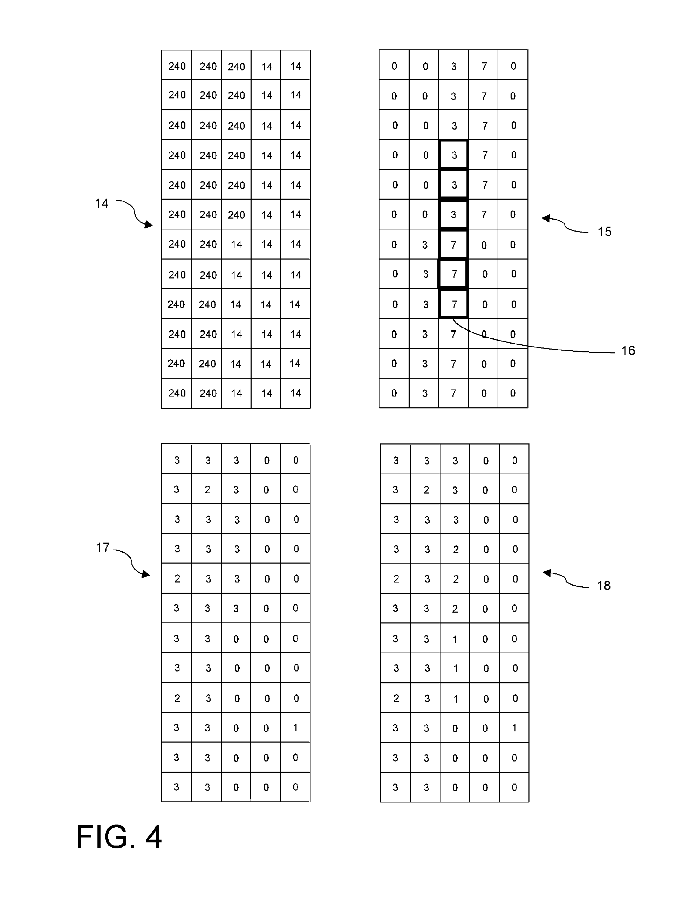

In the sets of pixels 6 to 13 eight different edge situations are discerned. Each edge pixel receives an edge value in the range of 1 to 8 to indicate its type and edge direction. The values 1 to 4 are used for edge pixels of the first type, the values 5 to 8 for edge pixels of the second type. The edge direction is determined by the position of other edge pixels in the direct environment. In this way an edge pixel has edge value 1 if the edge direction is to the left as shown in pixel set 6, edge value 2 if the edge direction is up as shown in pixel set 7, edge value 3 if the edge direction is to the right as shown in pixel set 8, and edge value 4 if the edge direction is up as shown in pixel set 6. The corresponding edge pixels of the second type are shown in pixel sets 10 to 13. Although there are sets of intensity values thinkable in which the edge direction can not be determined unambiguously, these do not occur for slanted lines or edges and are therefore not relevant for the invented algorithm, which is further elucidated in Fig. 4.

Fig. 4 shows four sets of pixel values. Set 14 shows an example of intensity values that correspond to the same part of the image as shown in Fig. 2. Every pixel that is for more than half of its area part of the slanted line has an intensity value 240, whereas every pixel that is not part of the slanted line has an intensity value 14. These intensity values refer to the amount of colorant that may be used for a pixel on a discrete scale from 0 to 255. Of course the invented method may also be applied similarly when the scale is inverted to the present one.

Pixel set 15 in Fig. 4 shows the edge values that are derived from the intensity values. When a pixel is not an edge its edge value is zero. In the subset of edge pixels, a number of pixels 16 are discerned that follow an index line, but shows a transition from one type to another. These transition pixels are elected for smoothing the edge, once the tone levels are determined. In the present embodiment the tone levels are determined for non-edge pixels by stochastic dithering and for edge pixels by thresholding. Four tone levels are used, numbered from 0 to 3.

In pixel set 17, an example of tone levels for the intensity value set 14 is shown.

Occasionally a non-edge pixel within the slanted line has a tone level 2, but most non-edge pixels have tone level 3. Outside the slanted line a non-edge pixel has occasionally tone level 1 and mostly 0. In contrast, all edge pixels have tone level 3 or tone level 0, since the thresholding operation applies the same predetermined thresholds for every edge pixel. In this way no interaction with a dither matrix, that is applied repetitively, is possible. A smoothing operation lowers the tone level of the transition pixels having tone level 3 and raises the transition pixels with tone level 0. This results in the tone levels that are shown in pixel set 18. When these tone levels are passed to a print engine, the print quality of slanted lines is improved considerably.

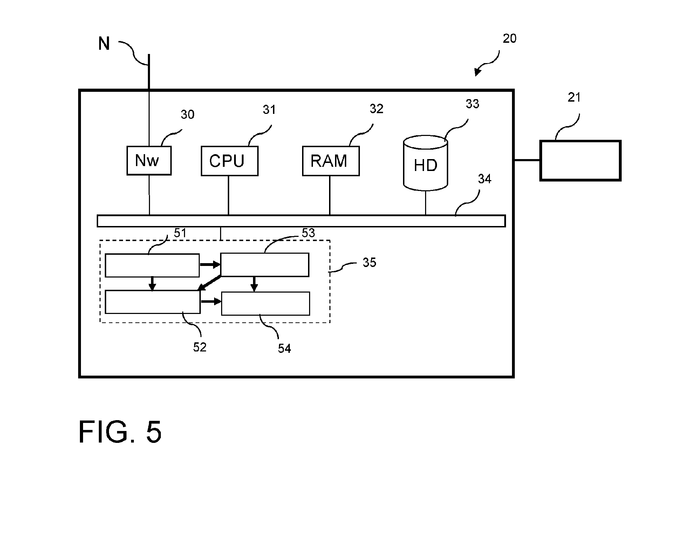

Fig. 5 shows how the invented algorithm is embodied in general computing hardware. A general purpose computer 20, which is connected to a network N for receiving print jobs, comprises a network adapter 30, a central processing unit 31, volatile memory 32 and non-volatile memory 33, all connected to a bus 34 for exchanging data and commands. Also connected to this bus is dedicated multilevel halftoning module 35. It comprises a rasterizing submodule 51, which assigns intensity values for pixels to be printed, an edge submodule 53, that determines which edge value is attributed to the pixels and selects the transition pixels among the edge pixels, a halftoning submodule 52, that assigns tone levels according to two halftoning methods, one for edge and one for non-edge pixels, and a smoothing module 54 that modifies the tone levels of the transition pixels without altering a sum of tone levels in order to preserve a line width impression. These tone levels are sent to a multilevel print engine 21, which is configured to apply an amount of colorant for each pixel according to the tone level of a pixel.

The above disclosure is intended as merely exemplary, and not to limit the scope of the invention, which is to be determined by reference to the following claims.

## Claims

1. An image processing method for generating a multilevel digital halftoned image, in which each pixel has one of at least three tone levels, the method comprising the steps of:
- identifying pixels that are part of an edge in a digital image as edge pixels;
- identifying pixels within the group of edge pixels as transition pixels, indicating pixels that are positioned on an index line of pixels around a position where an edge shows a transition in index line;
- attributing to pixels that are not edge pixels a tone level according to a first multilevel halftoning method;
- attributing to edge pixels a tone level according to a second multilevel halftoning method, and
- smoothing the tone levels of the transition pixels,
wherein, in the step of smoothing, a sum of tone levels of pixels in the multilevel halftoned image remains equal.

2. The image processing method according to claim 1, wherein the second multilevel halftoning method is a thresholding method with predetermined thresholds.

3. The image processing method according to claim 1, wherein a first type of edge pixels is identified, wherein an intensity value of an edge pixel is larger than a first threshold and an intensity value of a direct neighbouring pixel in one of the four directions along a pixel index line is smaller than a second threshold, and a second type of edge pixels is identified, wherein an intensity value of an edge pixel is smaller than the said second threshold and an intensity value of a direct neighbouring pixel in one of the four directions along a pixel index line is larger than the said first threshold.

4. The image processing method according to claim 3, wherein a direction of an edge pixel is identified by a direction in which other edge pixels are found and the type of the edge pixel.

5. The image processing method according to claim 4, wherein an edge pixel is a transition pixel if a predetermined number of adjacent edge pixels along an index line has the same direction and a predetermined part of this number of adjacent edge pixels are of a different type.

6. The image processing method according to claim 5, wherein the step of smoothing the tone levels of the transition pixels comprises lowering the tone level of the first type transition pixels by one level and raising the tone level of the second type transition pixels by one level.

7. A printer system comprising image processing means configured to process a digital image according to one of the methods in claim 1 to 6.

8. A printer system according to claim 7, in which an image is printed by ink jet technology.
